# EUROPEAN PATENT SPECIFICATION

(11) **EP 1 761 450 B1**
(45) Date of publication and mention of the grant of the patent: **13.08.2008**
(21) Application number: 05759211.5
(22) Date of filing: 29.06.2005
(51) Int. Cl.: D03D 47/36

(54) **OPTOELECTRONIC YARN SENSOR ASSEMBLY**
OPTO-ELEKTRONISCHE GARNSENSORANORDNUNG
ENSEMBLE CAPTEUR DE FIL OPTOELECTRONIQUE

(30) Priority: 29.06.2004 SE 0401676
(43) Date of publication of application: 14.03.2007
(73) Proprietor: IRO AB, 523 22 Ulricehamn (SE)
(72) Inventor: DANDOLO, Enzo, I-13816 Saliano Micca (IT)
(74) Representative: Grünecker, Kinkeldey, Stockmair & Schwanhäusser Anwaltssozietät
(86) International application number: PCT/EP2005/007002
(87) International publication number: WO 2006/002893

(56) References cited:
- EP-A- 0 162 134
- DE-A1- 3 413 838
- DE-A1- 3 640 851
- US-A- 3 740 562
- US-A- 4 112 665
- US-A- 4 948 260
- US-A- 5 221 960
- US-A- 5 966 211

## Description

The invention relates to optoelectronic yarn sensor assembly according to the preamble of claim 1.

The housing of such optoelectronic yarn sensor assemblies known from yarn feeders in the market conventionally consists of assembled injection moulded plastic parts. The emitter/receiver component is positioned in the socket with a distance along the optical axis from the optical lens positioned in the holding structure. Although the plastic material of the housing has a dark colour or is black (black antireflection surfaces inside), unavoidable light reflections occur during operation of the sensor assembly which light reflections deteriorate the reading of the signals generated by the receiver component. There are light reflections within the light channels and, in some cases, a sort of a Corona-effect in the detection zone by which undesirable reflection light is sent to the receiver component. These undesirable light reflections cause electronic noise when evaluating signals derived from the intensity of the light which travels from the detection zone to the receiver component. The electronic noise needs considerable electronic counter measures such as filtering in order to gain a clear output signal. Delicate yarn qualities either cannot be scanned reliably or need a fine and time consuming tuning of the sensor assembly evaluation process. Optoelectronic yarn sensor assemblies for yarn feeders are e.g. known from US 5,221,960 and US 5,966,211.

It is an object of the invention to provide an optoelectronic yarn sensor assembly which allows a clear and reliable output signal to be obtained independent from the yarn quality processed in the yarn feeder and independent from the optical conditions in the detecting zone.

This object is achieved by the characterising features of claim 1.

Each annular light barrier and/or light trap hinders the occurrence of undesirable light reflections in the vicinity of the emitter/receiver component and of the optical lens. Furthermore, the annular light barrier/light trap interrupts the transmission of disturbing reflection light into the detection zone and from the detection zone to the receiver component. The annular light barrier and/or light trap constitutes an additional structural feature which optically overrules the unavoidable tendency of the surface of the plastic or metallic material in the light channel to either generate or transmit disturbing reflection light. These counter measures suppress that undesired reflection light generated within the light channel is transmitted into the detection zone and to the receiver component, and also that reflection light originating from a sort of a Corona-effect in the detection zone can reach the receiver component. Only the true or "good" reflection light produced by the yarn and/or a reflector in the detector zone is allowed to reach the receiver component. Since electronic noise caused by undesired reflection light is avoided or minimized, the quality of the output signal is considerably improved.

In order to obstruct undesired reflection light, having the tendency to reach the peripheral region of the receiving surface of the receiver component and also the peripheral region of the optical lens, the inner diameter of the annular light barrier and/or light trap ought to be smaller than the inner diameter of the positioning socket or the holding structure, respectively. This is of particular advantage in case of an optical lens which has the tendency to transmit and diffract undesirable reflection light caused by a sort of Corona-effect in the detection zone in particular in the peripheral lens region. The annular light barrier and/or light trap functions similarly to an optical aperture, however, only in order to suppress the transmission of undesirable reflection light but not to obtain a certain depth of sharpness.

A relatively big inner diameter of the channel section is expedient in order to allow transmitting a maximum amount of the good reflection light and/or a maximum amount of the light emitted by the emitter component, and, at the same time, to keep the inner wall of the channel section as distant from the optical axis as possible to suppress internal reflections. The inner diameter of the channel section may be smaller than the inner diameter of the holding structure but larger than the inner diameter of the positioning socket.

The suppressing effect for the undesired reflection light even can be improved when an annular light barrier is structurally combined with an annular light trap. The light trap ought to comprise an inwardly open circumferentially continuous groove with a groove bottom diameter larger than the inner diameter of the annular light barrier. This design results in an optical labyrinth for undesired reflection light.

Expediently, the groove has inwardly diverging, preferably rounded side flanks, in order to avoid undesirable light reflections in the annular light trap itself.

Expediently, each annular light barrier comprises at least one ring body provided at the light channel inner wall. The ring body ought to have a black antireflection surface. The ring body is either a separate part inserted into the light channel or is integrally formed with the light channel inner wall.

In a preferred embodiment, each ring body is an O-ring made of black rubber or black elastomer. The O-rings are available on the market for fair price in many different dimensions and have, by nature, a rounded surface which is ideal in order to suppress light reflection and/or to absorb light.

In another preferred embodiment, the ring body has a generally trapezoidal cross section with side surfaces diverging in a direction towards the optical axis. The ring body is easy to manufacture, e.g. from plastic, and even can be formed integral with the light channel inner wall.

In another preferred embodiment, the ring body is a thin walled aperture plate, preferably with a rounded opening edge. The thin walled aperture plate is oriented perpendicular to the optical axis and, preferably has a light absorbing and/or black antireflection surface.

Additional assistance may be provided by a black or black painted plastic material at the light channel inner wall. The black antireflection colour or the light absorbing property generates or transmits, if any, a minimum of undesired reflection light only. A plastic lining of the light channel may be provided, or, alternatively, the entire housing is made from such a plastic material.

Conventionally in this technical field, the housing may consist of injection moulded parts.

In a preferred embodiment, the housing consists of a main part and a cover lid, both confining a respective cavity in each light channel, with a respective plastic or metallic sleeve insert positioned within the cavity. The sleeve insert e.g. may also be an integral injection moulded plastic part and defines e.g. the channel section and the holding structure for the optical lens, which already may be mounted in the structure during the moulding process of the sleeve insert.

In another preferred embodiment, the housing main part integrally contains a sub-housing of a second optoelectronic yarn sensor assembly also comprising inversely tilted arranged light channels. This design allows the placing of both optoelectronic yarn sensor assemblies close together in order to consume only a minimum of mounting space for both sensor assemblies.

In another preferred embodiment, the cover lid is provided with fixation pins engaging into holes at least formed in the sleeve insert for positioning the cover lid and also for positioning the sleeve inserts. This feature facilitates the assembly of the housing.

In order to prevent the intrusion of contamination into the light channels, the open mouths of the light channels ought to be covered by a transparent cover plate inserted to the bottom surface of the housing main part. The cover plate is, preferably, placed in a recess and flush with the bottom surface of the housing main part and sealed such that even liquids cannot intrude into the light channels. This is of particular importance for yarn feeders which process liquid treated yarn qualities or which operate at a water jet weaving machine.

Embodiments of the inventions will be described with the help of the drawings. In the drawings is:
- Fig. 1: a perspective view of a yarn feeder equipped with at least one optoelectronic yarn sensor assembly,
- Fig. 2: a perspective view of the optoelectronic yarn sensor assembly,
- Fig. 3: a cross sectional view of the sensor assembly of Fig. 2,
- Fig. 4: a schematic axial section of a detail variant,
- Fig. 5: a schematic axial section of another detail variant,
- Fig. 6: a schematic axial section of another detail variant, and
- Fig. 7: a schematic axial section of another detail variant.

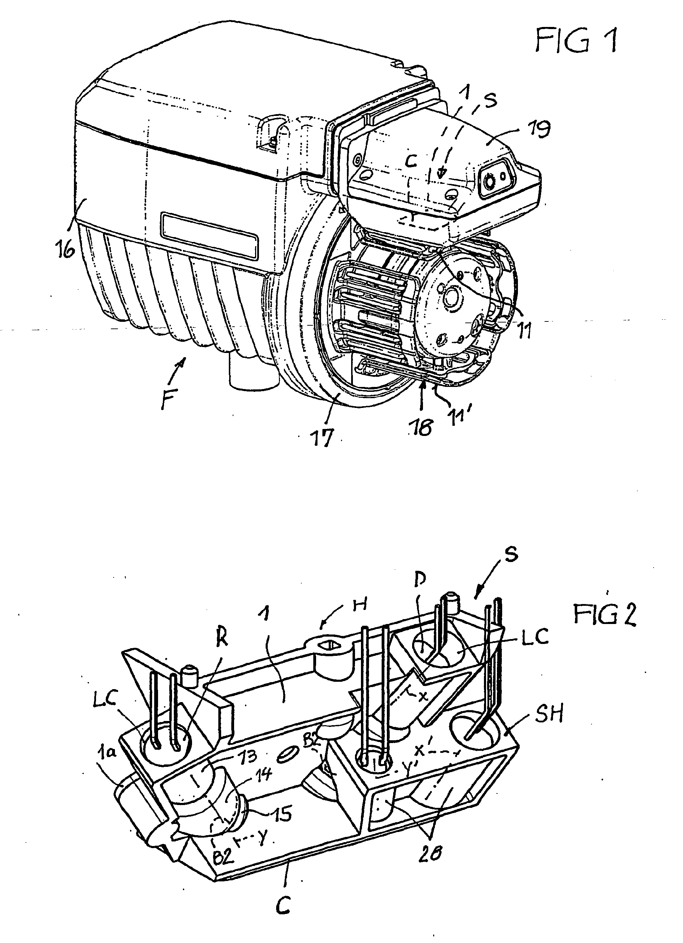

Fig. 1 illustrates a weft yarn storing and measuring feeding device (yam feeder F) for a not shown jet weaving machine. The yarn feeder F comprises a housing 16, a rotatably driven winding element 17 and a stationary storage body 18 of a rod cage type with several radially adjustable segments 11' (in order to allow diameter adjustments). The uppermost segment defines a detection zone 11 (e.g. by means of a reflector placed in the segment). A casing 19 fixed to the housing 16 contains a not shown stopping device for measuring the respective weft yarn length released for each pick. In addition, the casing 19 contains at least one optoelectronic yarn sensor assembly S, a housing part 1 which is covered by a transparent cover C in the vicinity of the detection zone 11.

The optoelectronic yarn sensor assembly S needs to be compact in order to consume as little mounting space as possible. The sensor assembly S is connected to a signal evaluation circuit (not shown) providing signals for a not shown control unit of the yarn feeder. The yarn sensor assembly S is used to monitor the frontmost boundary of a weft yarn supply consisting of a plurality of adjacent or separated yarn windings on the storage body 18, i.e. to detect the presence or absence or movement of a respective yarn winding in the detection zone 11. Alternatively or additively, the yarn sensor assembly may be used to count withdrawn windings and to confirm the withdrawal of the windings, respectively. The signals emitted by the yarn sensor assembly S are evaluated and/or processed electronically and are used to, e.g. to control a not shown drive motor of the winding element 17 and/or to count the windings withdrawn during a pick in association with the actuation of the not shown stopping device in the stopper housing 19.

The yarn feeder F in Fig. 1 is an example for illustration purposes only. The yarn sensor assembly S may be used instead in other types of yarn feeders, also in yarn feeders for knitting machines.

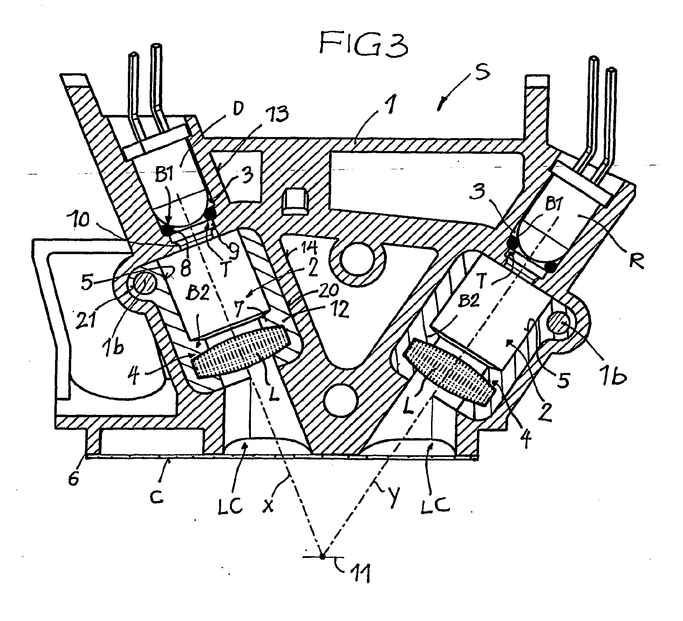

Fig 2 illustrates a housing H of the yarn sensor assembly S, e.g. as employed in the yarn feeder F of Fig. 1, shown more detailed in the section view of Fig. 3.

The housing H consists of injection moulded parts of a suitable plastic material. A housing main part 1 is open for the assembly for additional components at one side. The open housing main part side is closed by a closure lid 1 a. At a, preferably, planar lower surface of the housing main part 1 a transparent cover C is placed (as indicated in dotted lines in Fig. 1). The cover C may be secured in a recess 6 (Fig. 3) of the bottom surface of the housing main part 1 such that it is flush with the bottom surface. The cover C preferably, is completely sealed in order to prevent the intrusion of contamination into light channels LC of the housing H.

The housing main part 1 (Figs. 2 and 3) contains two light channels LC each following an optical axis XY. The light channels LC are inversely tilted arranged such that the optical axes XY intersect each other essentially in the detection zone 11 (Fig. 3 is a sectional view, in viewing direction, from the open side of the housing H of Fig. 2).

Each light channel LC has an inner part consisting of, preferably, a channel section 5, a positioning socket 3 at one end, and a holding structure 4 adjacent to the lower mouth which is situated in the bottom surface of the housing main part 1. The positioning socket 3 serves to place an emitter/receiver component D, R like a diode respectively a photo transistor, in operative positions in alignment with the respective optical axis X, Y. The holding structure 4 serves to position an optical lens L in alignment with the respective optical axis X, Y. The channel section 5 extends between the positioning socket 3 and the holding structure 4.

In Fig. 2 reference numbers 13, 14, and 15 are associated to the outer walls of the light channels LC and the holding structure 4.

In the embodiment shown in Fig. 2. a sub-housing SH for a second optoelectronic yarn sensor assembly (yam winding count sensor) is integrally formed in the housing main part 1. The sub-housing SH contains two light channels 28 which are inclined in relation to each other such that their optical axes X'Y' intersect each other in another detection zone.

According to the invention, each light channel LC contains an annular light barrier B1 adjacent to the positioning socket 3 and another annular light barrier B2 adjacent to the holding structure 4. In addition, or instead, an annular light trap T may be arranged close to the positioning socket 3 and/or close to the holding structure 4.

In the embodiment shown in Fig. 3 the annular light barrier B1 has a ring body 8 placed at the inner wall of the positioning socket 3 such that the ring body 8 defines a central opening the diameter of which is smaller than the inner diameter of the positioning socket 3, and also smaller than the emitting or receiving cross section of the respective emitter/receiver component D, R. The ring body 8 of the annular light barrier B1 is an O-ring made of black rubber or black elastomer, has substantially circular cross section and a surface which does not or does hardly reflect light.

The annular light barrier B2 arranged close to the holding structure 4 has a ring body 7, which in the embodiment shown, is unitarily formed with the inner wall of the channel section 5. The ring body 7 has a generally trapezoidal cross section with side flanks which converge in a direction towards the optical axis X, Y. The inner diameter of the opening defined by the ring body 7 is smaller than the inner diameter of the holding structure 4 or outer diameter of the optical lens L, such that a peripheral ring shaped region of the optical lens L remains covered. The light channels LC, at least in their extension between the positioning socket 3 and the lower mouths, have inner walls which are black or are painted black or have a light absorbing surface coating.

The ring body 7 is integrally formed in an insert sleeve 12 which is inserted into a cavity 20 formed in the housing main part 1. The insert sleeve 12 is a one-piece injection moulded part (plastic or metal), and forms the channel section 5, the holding structure 4 and the annular light barrier B2. The insert sleeve, preferably, is already formed with the embedded optical lens L. The cover lid 1 a (Fig. 2) has protruding fixation pins 1 b which engage into lateral holes 21 at least of the insert sleeve 12.

The annular light trap T which may be structurally combined with the annular light barrier B1 consists of an inwardly open, circumferentially continuous groove 9 the inner bottom diameter of which is larger than the inner diameter of the ring body 8. The flanks of the groove 9 diverge towards the optical axis XY, e.g. in rounded fashion as shown by the round shoulder 10. The inner diameter of the shoulder 10 corresponds substantially to the inner diameter of the opening of the ring body 8, i.e. the O-ring. The surface contour of the ring body 8 defines the other rounded side flank of the groove 9. The inner diameters of the annular light barrier B1 and of the annular light trap T are smaller than the inner diameter of the positioning socket 3. The inner diameter of the channel section 5 is larger than the inner diameter of the positioning socket 3. The inner diameter of the annular light barrier B2 is smaller than the inner diameter of the channel section 5 but is somewhat larger than the inner diameter of the positioning socket 3.

In the embodiment shown in Fig. 3, the annular light barrier B1 and the annular light trap T are combined in the vicinity of the positioning socket 3, while in the vicinity of the holding structure 4 only the annular light barrier B2 is provided. Alternatively (not shown) only the annular light barrier B1 or only the annular light trap T could be provided in the vicinity of the positioning socket 3. Furthermore, the relative positions of the annular light barrier B1 and the annular light trap T could be inverse. At the location of the annular light barrier B2, also a combination of an annular light barrier and an annular light trap could be provided.

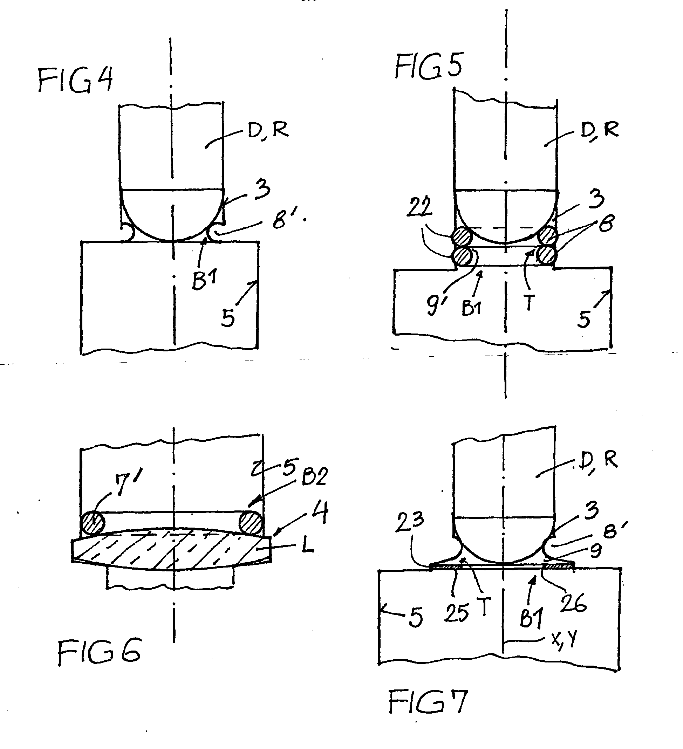

Fig. 4 to Fig. 7 illustrate several detail variants.

In Fig. 4 the ring body 8' is integrally formed with the inner wall of the positioning socket 3 in order to constitute the annular light barrier B1.

In Fig. 5 a combination of two ring bodies 8 (O-rings) is shown. The ring bodies 8 are placed in circumferential grooves 22 of the inner wall of the positioning socket 3 or alternatively, and not shown, could be secured in place at the cylindrical inner wall of the positioning socket 3 by their inherent elastic pre-load. The ring bodies 8 commonly constitute the annular light barrier B1 and, in between, an annular light trap T with the groove 9'.

In Fig. 6 the ring body 7' is inserted into the widened channel section 5 such that it is placed on or close to the optical lens L. The ring body 7' may be a O-ring secured in place by elastic preload and friction or by engagement into a circumferential groove as shown in Fig. 5.

In Fig. 7 the annular light barrier B1 is constituted by the ring body 8' shaped as shown in Fig. 4, and additionally by a thin walled aperture plate 25 inserted into a seat 23 in the transition of the positioning socket 3 into the channel section 5. The aperture plate 25 has a central opening which has substantially the same inner diameter as the ring body 8'. Preferably, the edge of the opening 26 is rounded convexly. The aperture plate 25 ought to have a black surface or a surface coating with light absorbing or antireflection property. Between the ring body 8' and the aperture plate 25 a circumferentially continuous groove 9 is formed constituting the annular light trap T which here is combined with the annular light barrier B1. Instead, the aperture plate 25 could be provided alone (close to the socket 3 or close to the structure 4), such that it constitutes an annular light barrier B1 or B2 without another ring body and with or without an annular light trap T.

## Claims

1. An optoelectronic yarn sensor assembly (S) for a yarn feeder (F), comprising a housing (H) defining two inversely tilted arranged separate light channels (LC) each surrounding an optical axis (XY) which axes intersect each other in a detection zone (11), a positioning socket (3) for a receiver/emitter component (D, R) and a holding structure (4) for an optical lens (L) in each light channel, at least the inner walls of the light channels being made of plastic or metallic material, **characterized in that** an inwardly protruding annular light barrier (B1, B2) and/or an outwardly recessed annular light trap (T) is provided in each light channel (LC) adjacent to the positioning socket (3) and adjacent to the holding structure (4), that in each light channel a channel section (5) extends between the opposite annular light barriers and/or light traps, and that the inner diameter of the channel section (5) is larger than the inner diameter of each respective light barrier and/or light trap.

2. Optoelectronic yarn sensor assembly as in claim 1, **characterized in that** the inner diameter of the annular barrier (B1) and/or light trap (T) positioned adjacent to the positioning socket (3) is smaller than the inner diameter of the positioning socket (3), that the inner diameter of the annular light barrier (B2) and/or light trap positioned adjacent to the holding structure (4) is smaller than the inner diameter of the holding structure (4), and that the annular light barrier and/or light trap defines a, preferably, circular opening which is located coaxially with respect to the optical axis (XY).

3. Optoelectronic yarn sensor assembly as in claim 1, **characterized in that** the inner diameter of the channel section (5) is smaller than the inner diameter of the holding structure (4) but is larger than the inner diameter of the positioning socket (3).

4. Optoelectronic yarn sensor assembly as in claim 1, **characterized in that** the annular light barrier (B1) is structurally combined with the annular light trap (T), and that the annular light trap (T) comprises an inwardly open circumferentially continuous groove (9) having a groove bottom diameter larger than the inner diameter of the opening of the annular light barrier (B1).

5. Optoelectronic yarn sensor assembly as in claim 4, **characterized in that** the groove (9) has inwardly diverging, preferably rounded, side flanks.

6. Optoelectronic yarn sensor assembly as in claim 1, **characterized in that** each annular light barrier (B1, B2) includes at least one ring body (7, 7', 8, 8') provided at the light channel inner wall, that the ring body has a light-absorbing, preferably, black surface, and that the ring body either is a separate part inserted into the light channel or is integrally formed with the light channel inner wall.

7. Optoelectronic yarn sensor assembly as in claim 6, **characterized in that** the ring body (7', 8) is an O-ring made of black rubber or black elastomer.

8. Optoelectronic yarn sensor assembly as in claim 6, **characterized in that** the ring body (7) has a generally trapezoidal cross section with side surfaces converging in a direction towards the optical axis (XY).

9. Optoelectronic yarn sensor assembly as in claim 6, **characterized in that** the ring body is a thin walled aperture plate (25), preferably with a rounded opening edge (26).

10. Optoelectronic yarn sensor assembly as in claim 1, **characterized in that** the plastic or metallic material constituting the light channel inner wall is light absorbing, preferably is black or carries a black wall coating.

11. Optoelectronic yarn sensor assembly as in claim 1, **characterized in that** the housing (H) consists of injection moulded parts, preferably plastic injection moulded parts.

12. Optoelectronic yarn sensor assembly as in claim 11, **characterized in that** the housing (H) consists of a main part (1) and a cover lid (1 a), both confining a respective cavity (20) in each light channel (LC), and that a respective plastic or metallic sleeve insert (12) is positioned within the cavity (20), the sleeve insert being an integral injection moulded part defining the channel section (5) and the holding structure (4) and receiving the optical lens (L) positioned in the holding structure (4).

13. Optoelectronic yarn sensor assembly as in claim 12, **characterized in that** the housing main part (1) integrally contains a sub-housing (SH) of a second optoelectronic yarn sensor assembly with two further inversely tilted arranged light channels (28).

14. Optoelectronic yarn sensor assembly as in claim 12, **characterized in that** the cover lid (1a) has at least two protruding fixation pins (1b) each engaging into a hole (21) formed at least in the sleeve insert (12).

15. Optoelectronic yarn sensor assembly as in claim 12, **characterized in that** the housing main part (1) has a planar bottom surface and a recess (6) containing the mouths of the light channels (LC), and that a transparent cover plate (C) is inserted into and sealed in the recess, preferably with the lower side of the cover plate (C) in flush alignment with the bottom surface of the housing main part.

## Patentansprüche

1. Optoelektronische Fadensensoreinrichtung (S) für ein Fadenliefergerät (F), mit einem zwei gegensinnig gekippt angeordnete, separate Lichtkanäle (LC) definierenden Gehäuse (H), wobei jeder Kanal eine optische Achse (X,Y) umgibt, welche Achsen einander in einer Detektionszone (11) schneiden, einer Positionierungsfassung (3) für eine Empfänger/Sender-Komponente (D,R), und einer Haltestruktur für eine optische Linse (L) in jedem Lichtkanal, wobei zumindest die Innenwände der Lichtkanäle aus Kunststoff- oder metallischem Material hergestellt sind, **dadurch gekennzeichnet, dass** in jedem Lichtkanal (LC) benachbart zu der Positionierungsfassung (3) und zu der Haltestruktur (4) je eine einwärts vorstehende ringförmige Lichtbarriere (B1,B2) und/oder eine nach außen Lichtfalle (T) vorgesehen ist bzw. sind, und dass sich vertiefte, ringförmige zwischen den gegenüberliegenden ringförmigen Lichtbarrieren und/oder Lichtfallen in jedem Lichtkanal eine Kanalsektion (5) erstreckt, deren inneren Durchmesser größer ist als der innere Durchmesser jeder jeweiligen Lichtbarriere und/oder Lichtfalle.

2. Optoelektronische Fadensensoreinrichtung nach Anspruch 1, **dadurch gekennzeichnet, dass** der innere Durchmesser der benachbart zu der Positionierungsfassung (3) positionierten ringförmigen Lichtbarriere (B1) und/oder Lichtfalle (T) kleiner ist als der innere Durchmesser der Positionierungsfassung (3), dass der innere Durchmesser der benachbart zu der Haltestruktur positionierten ringförmigen Lichtbarriere (B2) und/oder Lichtfalle (T) kleiner ist als der innere Durchmesser der Haltestruktur (4), und dass die ringförmige Lichtbarriere und/oder Lichtfalle eine, vorzugsweise, kreisförmige Öffnung definiert, die in Bezug zu der optischen Achse (X,Y) koaxial angeordnet ist.

3. Optoelektronische Fadensensoreinrichtung nach Anspruch 1, **dadurch gekennzeichnet, dass** der innere Durchmesser der Kanalsektion (5) kleiner ist als der innere Durchmesser der Haltestruktur (4), hingegen größer ist als der innere Durchmesser der Positionierungsfassung (3).

4. Optoelektronische Fadensensoreinrichtung nach Anspruch 1, **dadurch gekennzeichnet, dass** die ringförmige Lichtbarriere (B1) strukturell mit der ringförmigen Lichtfalle (T) kombiniert ist, und dass die ringförmige Lichtfalle (T) eine einwärts offene, in Umfangsrichtung kontinuierliche Nut (9) mit einem Nutgrunddurchmesser größer als der innere Durchmesser der Öffnung der ringförmigen Lichtbarriere (B1) aufweist.

5. Optoelektronische Fadensensoreinrichtung nach Anspruch 4, **dadurch gekennzeichnet, dass** die Nut (9) einwärts divergierende, vorzugsweise gerundete, Seitenflanken besitzt.

6. Optoelektronische Fadensensoreinrichtung nach Anspruch 1, **dadurch gekennzeichnet, dass** jede ringförmige Lichtbarriere (B1, B2) zumindest einen Ringkörper (7, 7',8, 8') umfasst, der an der inneren Wand des Lichtkanals angeordnet ist, dass der Ringkörper eine Licht absorbierende, vorzugsweise schwarze, Oberfläche hat, und dass der Ringkörper entweder ein separater, in den Lichtkanal eingesetzter Teil oder mit der inneren Wand des Lichtkanals integral geformt ist.

7. Optoelektronische Fadensensoreinrichtung nach Anspruch 6, **dadurch gekennzeichnet, dass** der Ringkörper (7', 8) ein aus schwarzem Gummi oder schwarzem Elastomer hergestellter O-Ring ist.

8. Optoelektronische Fadensensoreinrichtung nach Anspruch 6, **dadurch gekennzeichnet, dass** der Ringkörper (7) einen allgemein trapezförmigen Querschnitt mit Seitenflächen aufweist, die in einer Richtung zu der optischen Achse (X,Y) konvergieren.

9. Optoelektronische Fadensensoreinrichtung nach Anspruch 6, **dadurch gekennzeichnet, dass** der Ringkörper eine dünnwandige Blendenplatte (25) ist, vorzugsweise mit einem gerundeten Blendenöffnungsrand (26).

10. Optoelektronische Fadensensoreinrichtung nach Anspruch 1, **dadurch gekennzeichnet, dass** das die innere Wand des Lichtkanals bildende Kunststoff- oder metallische Material Licht absorbierend ist, vorzugsweise schwarz ist, oder eine schwarze Wandbeschichtung trägt.

11. Optoelektronische Fadensensoreinrichtung nach Anspruch 1, **dadurch gekennzeichnet, dass** das Gehäuse (H) aus Spitzgussformteilen besteht, vorzugsweise aus Kunststoff-Spritzguss-Formteilen.

12. Optoelektronische Fadensensoreinrichtung nach Anspruch 11, **dadurch gekennzeichnet, dass** das Gehäuse (H) aus einem Hauptteil (1) und einem Deckel (1a) besteht, die beide jeweils gemeinsam in jedem Lichtkanal (LC) eine Kavität (20) umgeben, und dass in der Kavität (20) ein Kunststoff- oder metallischer Hülseneinsatz (12) positioniert ist, welcher Hülseneinsatz ein integraler Spritzgussformteil ist, der die Kanalsektion (5) und die Haltestruktur (4) definiert und die in der Haltestruktur (4) positionierte optische Linse (L) aufnimmt.

13. Optoelektronische Fadensensoreinrichtung nach Anspruch 12, **dadurch gekennzeichnet, dass** der Hauptteil (1) des Gehäuses integral ein Unter-Gehäuse (S,H) einer zweiten Optoelektronische Fadensensoreinrichtung mit zwei weiteren gegensinnig gekippt angeordneten Lichtkanälen (28) enthält.

14. Optoelektronische Fadensensoreinrichtung nach Anspruch 12, **dadurch gekennzeichnet, dass** der Deckel (1 a) zumindest zwei vorstehende Fixierungsstifte (1 b) aufweist, deren jeder in ein zumindest in dem Hülseneinsatz (12) geformtes Loch (21) eingreift.

15. Optoelektronische Fadensensoreinrichtung nach Anspruch 12, **dadurch gekennzeichnet, dass** der Hauptteil (1) des Gehäuses eine ebene Bodenfläche und eine Vertiefung (6) aufweist, welche die Mündungen der Lichtkanäle (LC) enthält, und dass in die Vertiefung eine transparente Abdeckplatte (C) eingesetzt und versiegelt ist, vorzugsweise mit der unteren Seite der Abdeckplatte (C) in bündiger Ausrichtung mit der Bodenfläche des Hauptteils (1) des Gehäuses.

## Revendications

1. Ensemble (S) de détecteur optoélectronique de fil pour un dévideur (F) de fil, qui comprend un logement (H) qui définit deux canaux (LC) à lumière séparés et inclinés dans des sens opposés, chacun entourant un axe optique (XY), ces axes présentant une intersection l'un avec l'autre dans une zone de détection (11), une douille de positionnement (3) d'un composant récepteur/émetteur (D, R) et une structure de maintien (4) pour une lentille optique (L) dans chaque canal à lumière, au moins les parois intérieures des canaux à lumière étant constituées d'un matériau synthétique ou métallique,
**caractérisé en ce que**
une barrière annulaire (B1, B2) à lumière qui fait saillie vers l'intérieur et/ou un piège (T) à lumière annulaire en creux vers l'extérieur sont prévus dans chaque canal (LC) à lumière en position adjacente à la douille de positionnement (3) et à la structure de maintien (4),
**en ce que** dans chaque canal à lumière une partie (5) de canal s'étend entre les barrières annulaires à lumière opposées et/ou les pièges à lumière et **en ce que** le diamètre interne de la partie (5) du canal est plus grand que le diamètre interne de chaque barrière à lumière et/ou de chaque piège à lumière.

2. Ensemble de détecteur optoélectronique de fil selon la revendication 1, **caractérisé en ce que** le diamètre interne de la barrière annulaire (B1) et/ou du piège à lumière (T) placé en position adjacente à la douille de positionnement (3) est plus petit que le diamètre interne de la douille de positionnement (3), **en ce que** le diamètre interne de la barrière annulaire (B2) à lumière et/ou du piège à lumière situé à côté de la structure de maintien (4) est plus petit que le diamètre interne de la structure de maintien (4) et **en ce que** la barrière annulaire à lumière et/ou le piège à lumière définissent de préférence une ouverture circulaire qui est placée coaxialement par rapport à l'axe optique (XY).

3. Ensemble de détecteur optoélectronique de fil selon la revendication 1, **caractérisé en ce que** le diamètre interne de la partie (5) de canal est plus petit que le diamètre interne de la structure de maintien (4) mais plus grand que le diamètre interne de la douille de positionnement (3).

4. Ensemble de détecteur optoélectronique de fil selon la revendication 1, **caractérisé en ce que** la barrière annulaire (B1) à lumière est combinée structurellement avec le piège annulaire (T) à lumière et **en ce que** le piège annulaire (T) à lumière comprend une rainure (9) périphériquement continue, ouverte vers l'extérieur, et dont le diamètre du fond est plus grand que le diamètre interne de l'ouverture de la barrière annulaire (B1) à lumière.

5. Ensemble de détecteur optoélectronique de fil selon la revendication 4, **caractérisé en ce que** la rainure (9) présente des flancs latéraux, de préférence arrondis, qui divergent vers l'intérieur.

6. Ensemble de détecteur optoélectronique de fil selon la revendication 1, **caractérisé en ce que** chaque barrière annulaire (B1, B2) à lumière comprend au moins un corps annulaire (7, 7', 8, 8') prévu sur la paroi intérieure du canal à lumière, **en ce que** le corps annulaire présente une surface qui absorbe la lumière, de préférence noire, et **en ce que** le corps annulaire est une partie séparée insérée dans le canal à lumière ou est formé d'un seul tenant avec la paroi intérieure du canal à lumière.

7. Ensemble de détecteur optoélectronique de fil selon la revendication 6, **caractérisé en ce que** le corps annulaire (7', 8) est un joint torique constitué de caoutchouc noir ou d'élastomère noir.

8. Ensemble de détecteur optoélectronique de fil selon la revendication 6, **caractérisé en ce que** le corps annulaire (7) présente une section transversale globalement trapézoïdale dont les surfaces latérales convergent en direction de l'axe optique (XY).

9. Ensemble de détecteur optoélectronique de fil selon la revendication 6, **caractérisé en ce que** le corps annulaire est une plaque mince perforée (25), de préférence avec un bord (26) d'ouverture arrondi.

10. Ensemble de détecteur optoélectronique de fil selon la revendication 1, **caractérisé en ce que** le matériau synthétique ou métallique qui constitue la paroi intérieure du canal à lumière absorbe la lumière et est de préférence noir ou porte un revêtement de paroi noir.

11. Ensemble de détecteur optoélectronique de fil selon la revendication 1, **caractérisé en ce que** le logement (H) est constitué de pièces moulées par injection, de préférence des pièces moulées par injection de matière synthétique.

12. Ensemble de détecteur optoélectronique de fil selon la revendication 11, **caractérisé en ce que** le logement (H) est constitué d'une pièce principale (1) et d'un couvercle (1a), les deux délimitant une cavité respective (20) dans chaque canal (LC) à lumière, et **en ce qu'**un insert respectif (12) métallique ou synthétique de manchon est placé dans la cavité (20), l'insert de manchon étant une pièce d'un seul tenant moulée par injection qui définit la partie (5) de canal et la structure de maintien (4) et qui reçoit la lentille optique (L) placée dans la structure de maintien (4).

13. Ensemble de détecteur optoélectronique de fil selon la revendication 12, **caractérisé en ce qu'**un sous-logement (SH) d'un deuxième ensemble de détecteur optoélectronique de fil avec deux canaux (28) à lumière supplémentaire inclinés dans des sens opposés est intégré à la pièce (1) principale du logement.

14. Ensemble de détecteur optoélectronique de fil selon la revendication 12, **caractérisé en ce que** le couvercle (1a) présente au moins deux broches (1b) de fixation qui font saillie, chacune s'engageant dans un orifice (21) formé au moins dans l'insert (12) de manchon.

15. Ensemble de détecteur optoélectronique de fil selon la revendication 12, **caractérisé en ce que** la pièce principale (1) du logement présente une surface de fond plane et un creux (6) qui contient les ouvertures du canal (LC) à lumière et **en ce qu'**une plaque (C) de couvercle transparente est insérée et scellée dans le creux, de préférence avec le côté inférieur de la plaque (C) de couvercle à chant par rapport à la surface du fond de la pièce principale du logement.
